# EUROPÄISCHE PATENTSCHRIFT

(11) **EP 2 337 744 B1**
(45) Veröffentlichungstag und Bekanntmachung des Hinweises auf die Patenterteilung: **31.10.2012**
(21) Anmeldenummer: 09778384.9
(22) Anmeldetag: 08.09.2009
(51) Int. Cl.: B65D 1/48

(54) **LADUNGSTRÄGER**
LOAD CARRIER
PORTEUR DE CHARGE

(30) Priorität: 15.09.2008 DE 102008047351
(43) Veröffentlichungstag der Anmeldung: 29.06.2011
(73) Patentinhaber: Georg Utz Holding AG, 5620 Bremgarten (CH)
(72) Erfinder: DUBOIS, Jean-Marc, CH-5620 Bremgarten (CH)
(74) Vertreter: Röther, Peter
(86) Internationale Anmeldenummer: PCT/EP2009/006495
(87) Internationale Veröffentlichungsnummer: WO 2010/028793

(56) Entgegenhaltungen:
- DE-A1- 3 709 190
- US-A- 4 316 419

## Beschreibung

Die Erfindung betrifft einen Ladungsträger, insbesondere Tray zum Transport und zur Lagerung von Gütern, der einen Boden mit einer Aufnahmefläche für die zu transportierenden Güter und einer Bodenunterseite mit einer Struktur aus sich kreuzenden, vertikal von der Bodenfläche abstehenden Rippen aufweist, wobei in parallel zueinander angeordenten, einander benachbarten Rippen von einer Bodenseite zur anderen miteinander fluchtende Öffnungen eingebracht sind , in die eine Verstärkungsleiste von einer Seite des Bodens bis zur gegenüberliegenden Seite einschiebbar ist, wobei die Öffnungen in den Rippen durch durch die Aufnahmefläche in die vertikalen Rippen eingebrachte Ausnehmungen gebildet sind.

Obwohl die vorliegende Erfindung auch bei Transportbehältern, Paletten und Großladungsträgern verwirklicht werden kann, wird sie im folgenden anhand eines Trays erläutert. Derartige Trays sind flachbauende Ladungsträger mit in der Regel nicht sehr hohem Rand. Sie verfügen über eine Aufnahmefläche für die zu transportierenden Güter und stehen in der Regel mit der Bodenfläche auf.

Zur Verstärkung und Versteifung der Trays (oder auch der Behälterböden) sind diese an der Bodenunterseite mit einer Rippenstruktur versehen. Diese Struktur kann aus vertikal von der Bodenunterseite nach unten abstehenden rechtwinklig zueinander verlaufenden Rippen bestehen, wobei im vorliegenden Fall die Ausrichtung der Rippen parallel zu den Seitenkanten des Trays ist.

Abhängig von den zu transportierenden Gütern reicht eine derartige Rippenstruktur allein zur Verstärkung und Versteifung des Trays nicht immer aus.

Daher werden derartige Trays (aber auch die oben genannten Behälter) bodenseitig mit in den Boden integrierten Leisten aus beispielsweise Stahl verstärkt.

Ein derartiges Tray gemäß dem Oberbegriff des Anspruchs 1 ist beispielsweise aus der US 4,316,419 A bekannt.

Der Erfindung liegt daher die Aufgabe zugrunde, einen Ladungsträger der eingangs genannten Art anzugeben, bei dem ein oder mehrere derartige Verstärkungsleisten lediglich bei Bedarf eingeführt werden können und dabei gegen unbeabsichtigtes Herausrutschen gesicher sind.

Die Erfindung löst diese Aufgabe durch die kennzeichnenden Merkmale des Anspruchs 1.

Die erfindungsgemäße Aufgabe wird ebenfalls durch ein Verfahren zum Spritzgießen eines Ladungsträgers, insbesondere Trays, gemäß Anspruch 2 gelöst.

Obwohl also der Aufnahmekanal für die Verstärkungsleisten parallel zur Bodenfläche verläuft, braucht das Spritzgießwerkzeug nicht mit einem senkrecht zur Formschließrichtung arbeitenden Formwerkzeugteil ausgerüstet zu werden.

Dadurch, dass die von beiden Seiten aufeinander zu bewegten und miteinander in Kontakt kommenden Kerne der beiden Formwerkzeughälften in Formschließrichtung arbeiten, ist das Formwerkzeug technisch einfach aufgebaut und kann die miteinander fluchtenden Öffnungen in einem Arbeitsgang mit der Herstellung des Trays erzeugen.

Die in der Regel pyramidenstumpfförmigen Kerne arbeiten derart zusammen, dass bei geschlossenem Formwerkzeug jeweils zwei Pyramidenseiten des jeweiligen Kerns mit dem entgegengesetzt gerichteten benachbarten Kern in Kontakt gelangen, wodurch der eine Kern die Ausnehmung im Boden und in der korrespondierenden Rippe erzeugt und der entgegengesetzt arbeitende Kern die Rippenstruktur und die Unterseite des Bodens formt. Da wo die beiden miteinander zusammenwirkenden Kerne in Kontakt gelangen, kann kein Kunststoffmaterial beim Spritzgießen hingelangen, so dass beim Entformen die miteinander fluchtenden Öffnungen verbleiben.

In den randseitigen Öffnungen, also dort wo die Verstärkungsleiste einerseits eingeschoben werden kann und andererseits nach dem Einschieben endet, sind die Halteelemente für die Verstärkungsleiste vorgesehen, wobei diese aus einer elastischen Zunge bestehen und die Elastizität des für den Ladungsträger verwendeten Kunststoffmaterials ausgenutzt wird. In die entgegengesetzt liegende Öffnung kann ein Anschlag eingeformt sein, der verhindert, dass die Verstärkungsleiste in dieser Richtung aus dem Ladungsträger herausrutschen kann, es kann alternativ auch eine zweite elastische Zunge vorgesehen sein. Die Zunge ist erfindungsgemäß schräg nach unten und in Einschubrichtung der Verstärkungsleiste gerichtet. Somit wird beim Einschieben der Verstärkungsleiste die elastische Zunge nach oben gebogen, bis die Verstärkungsleiste vollständig eingeführt worden ist, so dass die elastische Zunge hinter dem Ende der Verstärkungsleiste in ihre entspannte Lage zurückfedern kann.

Die Erfindung wird im folgenden anhand von Zeichnungen dargestellt und näher erläutert.

Es zeigen:
- Fig. 1: Eckbereich eines Trays von der Aufnahmeflächenseite gesehen (ohne Verstärkungsleiste)
- Fig. 2: Tray gemäß Figur 1 mit eingeführter Verstärkungsleiste
- Fig. 3: Tray gemäß Figur 1 im Querschnitt (ohne Verstärkungsleiste)
- Fig. 4: Tray gemäß Figur 3 (mit eingesetzter Verstärkungsleiste)

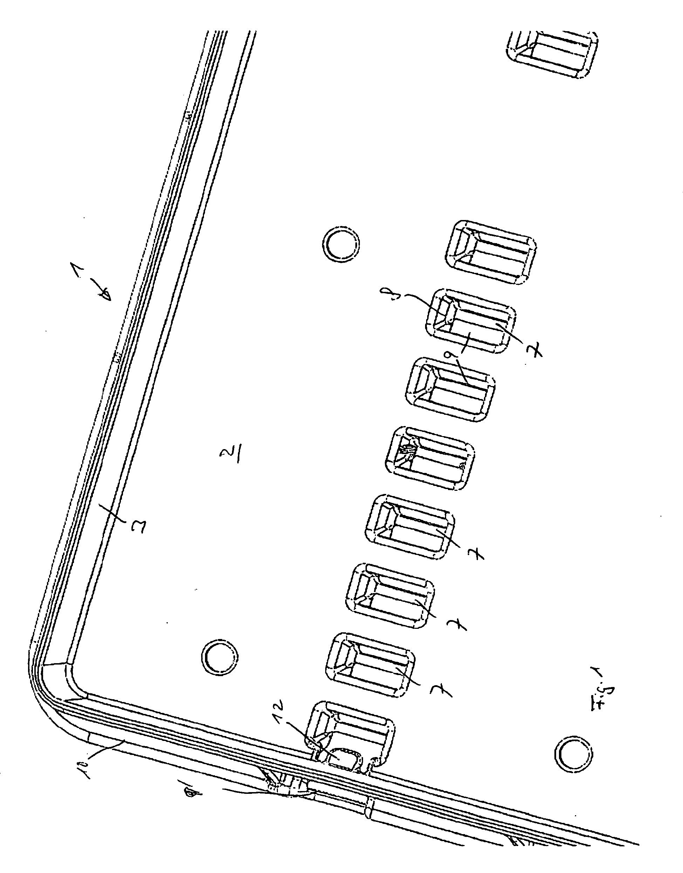

In den Figuren 1 bis 4 ist perspektivisch in Teildarstellung ein spritzgegossenes Kunststofftray dargestellt und allgemein mit dem Bezugszeichen 1 versehen. Es besteht im wesentlichen aus einem Boden 2 und einem rund umlaufenden Rahmen 3, der eine Aufnahmefläche 4 für zu transportierende Güter aufweist. Auf der der Aufnahmefläche 4 entgegen gesetzten Seite des Bodens 2 ist der Boden 2 mittels einer Rippenstruktur 5 verstärkt.

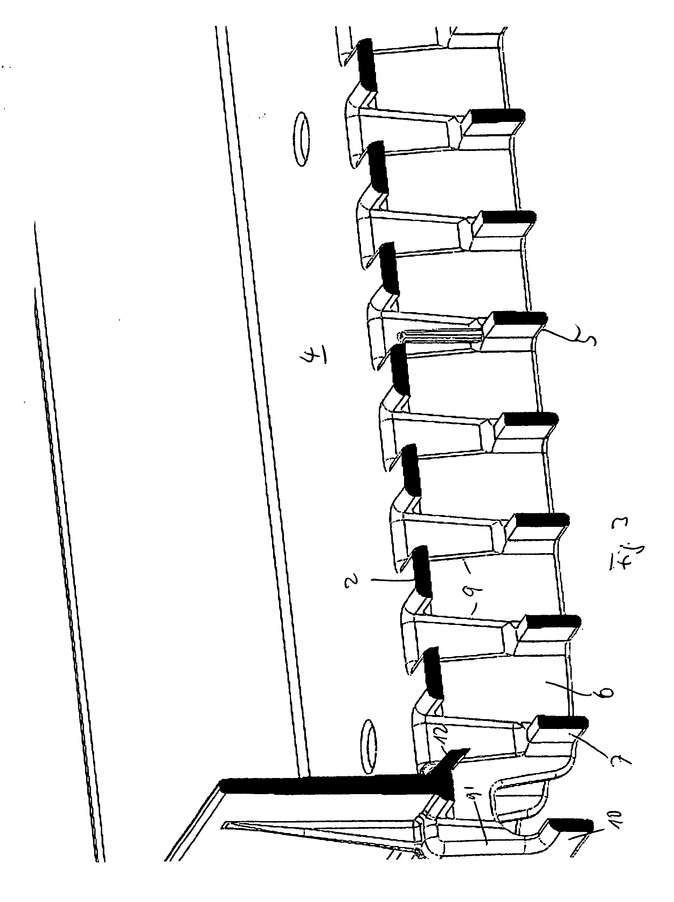

Die Rippenstruktur 5 besteht aus sich rechtwinklig kreuzenden Rippen, die vertikal von der Bodenunterseite gerichtet sind. Wie insbesondere aus der Figur 3 hervorgeht, verlaufen die Rippen 6 und 7 parallel zu den Seitenrändern des Trays 1.

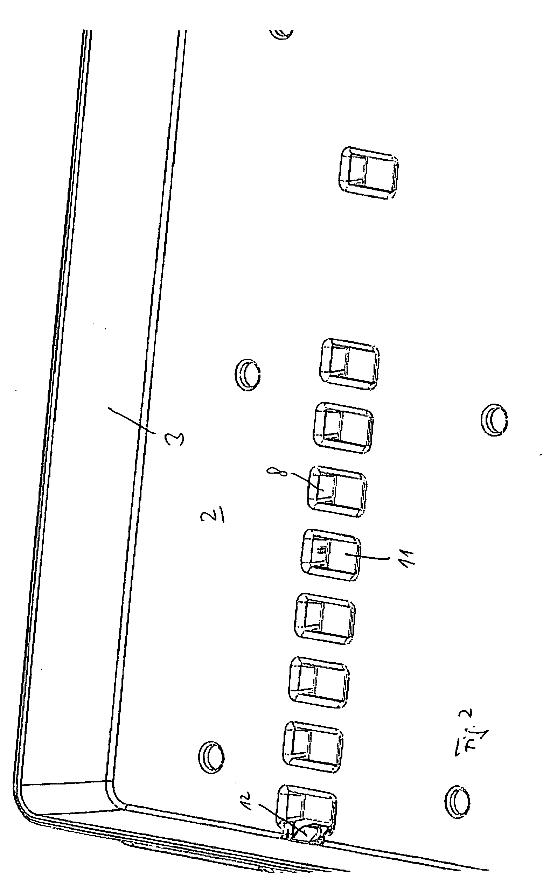

Wie aus den Figuren 1 und 2 deutlich hervorgeht, sind in die Aufnahmefläche 4 des Bodens 2 Ausnehmungen 8 eingeformt, die sich bis in eine darunter liegende Rippe 7 konisch fortsetzen. Diese Ausnehmungen 8 sind auf einer geraden Linie von einem Bodenrand zum anderen angeordnet.

Wie aus Figur 3 hervorgeht, bilden die Ausnehmungen 8 miteinander fluchtende Öffnungen 9, wobei auch eine Öffnung 9' in der eine seitliche Schürze 10 bildenden Randrippe 7 vorgesehen ist.

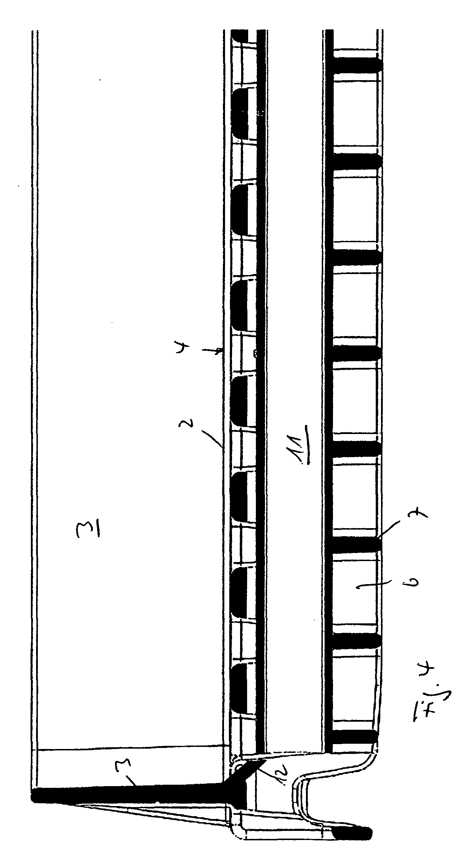

Wie aus den Figuren 2 und 4 hervorgeht, wird durch die Öffnung 9' in die miteinander fluchtenden Öffnungen 9 eine Verstärkungsleiste, (beispielsweise aus Metall) seitlich eingeschoben.

Damit die Verstärkungsleiste 11 nicht aus dem Tray 1 herausrutscht, sind in einer randseitigen Öffnung 9 (nicht dargestellt) ein Anschlag und im Bereich der Einschuböffnung eine elastische Zunge 12 vorgesehen. Beim Einschieben der Verstärkungsleiste 11 durch 9' wird die Zunge 12 nach oben gebogen, so lange bis die Verstärkungsleiste 11 vollständig eingeführt worden ist. Das hintere Ende der Verstärkungsleiste 11 befindet sich dann hinter der Zunge 12, so dass diese in ihre Ausgangsstellung zurück schwingen kann.

Zur Herstellung eines derartigen Trays 1 wird ein Formwerkzeug benutzt, das aus im wesentlichen zwei Werkzeughälften besteht. Die eine Werkzeughälfte formt die Aufnahmefläche 4, während die andere Werkzeughälfte die Rippenstruktur 5 formt. Zur Ausformung der Ausnehmungen 8 taucht ein Kern der die Aufnahmefläche bildenden Werkzeughälfte zwischen die die Rippenstruktur bildenden Kerne der anderen Werkzeughälfte, wobei sich jeweils zwei Seiten der einander korrespondierenden Kerne berühren, so dass beim Spritzgießen hier kein Kunststoffmaterial hin gelangen kann. Nach dem Entformen verbleiben an der Stelle, an der sich die Kerne berührt haben, die zu beiden Seiten offenen Ausnehmungen 8 mit den Öffnungen 9.

## Patentansprüche

1. Ladungsträger, insbesondere Tray zum Transport und zur Lagerung von Gütern, der einen Boden (2) mit einer Aufnahmefläche (4) für die zu transportierenden Güter und einer Bodenunterseite mit einer Struktur aus sich kreuzenden, vertikal von der Bodenfläche abstehenden Rippen (6,7) aufweist, wobei in parallel zueinander angeordneten, einander benachbarten Rippen (7) von einer Bodenseite zur anderen miteinander fluchtende Öffnungen (9) eingebracht sind , in die eine Verstärkungsleiste (11) von einer Seite des Ladungsträgers bis zur gegenüberliegenden Seite einschiebbar ist, wobei die Öffnungen (9) in den Rippen (7) durch durch die Aufnahmefläche in die vertikalen Rippen eingebrachte Ausnehmungen (8) gebildet sind und die beiden randseitigen Öffnungen (9) in den Rippen (7) mit Halteelementen (12) für die Verstärkungsleiste (11) versehen sind,
**dadurch gekennzeichnet,**
**dass** in einer der randseitigen Öffnungen (9) eine elastische Zunge (12) als Halteelement eingeformt ist und die entgegengesetzt liegende Öffnung (9) einen Anschlag für die Verstärkungsleiste aufweist, oder dass in beiden randseitigen Öffnungen (9) je eine elastische Zunge (12) eingeformt ist, und dass die Zunge (12) schräg nach unten und in Einschubrichtung der Verstärkungsleiste (11) gerichtet ist.

2. Verfahren zum Spritzgießen eines Ladungsträgers, insbesondere Trays, der einen Boden (2) mit einer Aufnahmefläche (4) für die zu transportierenden Güter und einer Bodenunterseite mit einer Struktur aus sich kreuzenden, vertikal von der Bodenfläche abstehenden Rippen (6,7) aufweist, wobei in parallel zueinander angeordneten, einander benachbarten Rippen (7) von einer Bodenseite zur anderen miteinander fluchtende Öffnungen (9) eingebracht sind, in die eine Verstärkungsleiste (11) von einer Seite des Ladungsträgers (1) zur anderen einschiebbar ist,
wobei die miteinander fluchtenden Öffnungen (9) in den vertikalen Rippen (7) dadurch erzeugt werden, dass jeweils ein Kern einer Spritzgießwerkzeughälfte die im wesentlichen die Aufnahmefläche (4) formt, von der Aufnahmeflächenseite in den Bereich einer vertikalen Rippe (7), eine Ausnehmung im Boden und in dieser Rippe bildend, eintaucht und entgegengesetzt jeweils ein korrespondierender Kern der zweiten, die Bodenunterseite (5) formende Spritzgießwerkzeughälfte von der Rippenseite, wobei die Kerne einander seitlich berühren,
**dadurch gekennzeichnet,**
**dass** in einer der randseitigen Öffnungen (9) eine elastische Zunge (12) als Halteelement eingeformt wird, und die entgegengesetzt liegende Öffnung (9) einen Anschlag für die Verstärkungsleiste (11) aufweist, oder dass in beiden randseitigen Öffnungen (9) je eine elastische Zunge (12) eingeformt ist, wobei die Zunge (12) schräg nach unten und in Einschubrichtung der Verstärkungsleiste (11) gerichtet ist.

## Claims

1. Load carrier, in particular tray for the transport and storage of goods, having a base (2) comprising a receiving surface (4) for the goods to be transported and a base bottom having a structure made from ribs (6, 7) crossing each other and projecting vertically from the base surface, wherein aligned openings (9) are made from one base side to the other in adjacent ribs (7) arranged parallel to each other, into said openings a reinforcement bar (11) can be inserted from one side of the load carrier (1) to the opposite side, wherein the openings (9) in the ribs (7) are formed by means of cut-outs (8) made in the vertical ribs through the receiving surface, and the two edge openings (9) in the ribs (7) are provided with securing elements (12) for the reinforcement bar (11),
**characterised in that**,
an elastic lug (12) is formed in one of the edge openings (9) as a securing element and the opening (9) located opposite has a stop for the reinforcement bar, or that an elastic lug (12) is formed in each of the two edge openings (9), and that the lug (12) is aligned obliquely downwards and in the insertion direction of the reinforcement bar (11).

2. Method of injection moulding a load carrier, in particular tray, having a base (2) comprising a receiving surface (4) for the goods to be transported and a base bottom having a structure made from ribs (6, 7) crossing each other and projecting vertically from the base surface, wherein aligned openings (9) are made from one base side to the other in adjacent ribs (7) arranged parallel to each other, into said openings a reinforcement bar (11) can be inserted from one side of the load carrier (1) to the opposite side, wherein the openings (9) in the vertical ribs (7), aligned with each other, are made in such a way that, on the one hand, one core in a half of the injection moulding tool, which essentially forms the receiving surface (4), plunges from the receiving surface side into the region of a vertical rib (7), forming a cut-out in the base and in this rib, and, on the other hand, opposing it, a corresponding core of the second half of the injection moulding tool forms the base bottom (5) from the rib side, whereby the cores come into contact with each other laterally,
**characterised in that**
an elastic lug (12) is formed in one of the edge openings (9) as a securing element and the opening (9) located opposite has a stop for the reinforcement bar (11), or that an elastic lug (12) is formed in each of the two edge openings (9) wherein the lug (12) is aligned obliquely downwards and in the insertion direction of the reinforcement bar (11).

## Revendications

1. Support de charge, en particulier un plateau, pour le transport et le stockage de marchandises, comportant un fond (2) avec une surface de réception (4) pour les marchandises à transporter et une surface inférieure de fond ayant une structure constituée de nervures (6, 7) qui se croisent, faisant verticalement saillie à partir de la surface de fond, dans lequel des ouvertures (9) alignées les unes avec les autres sont introduites dans des nervures (7) disposées parallèlement les unes aux autres et adjacentes les unes aux autres, à partir d'un côté de fond, ouvertures dans lesquelles une barre de renfort (11) peut être poussée à partir d'un côté du support de charge (1) jusqu'au côté opposé, dans lequel les ouvertures (9) dans les nervures (7) sont formées par des évidements (8) introduits dans les nervures verticales à travers la surface de réception, et les deux ouvertures côté bord (9) dans les nervures (7) sont munies d'éléments de support (12) pour la barre de renfort (11),
**caractérisé en ce qu'**une languette élastique (12) est formée dans l'une des ouvertures côté bord (9) comme un élément de support, et l'ouverture opposée (9) a une butée pour la barre de renfort, ou **en ce qu'**une languette élastique (12) est formée dans chacune des deux ouvertures côté bord (9), et **en ce que** la languette (12) est orientée de biais vers le bas et dans la direction d'insertion de la barre de renfort (11).

2. Procédé de moulage par injection d'un support de charge, en particulier un plateau, comportant un fond (2) avec une surface de réception (4) pour les marchandises à transporter et une surface inférieure de fond ayant une structure constituée de nervures (6, 7) qui se croisent, faisant verticalement saillie à partir de la surface de fond, dans lequel des ouvertures (9) alignées les unes avec les autres sont introduites dans des nervures (7) disposées parallèlement les unes aux autres et adjacentes les unes aux autres, à partir d'un côté de fond, ouvertures dans lesquelles une barre de renfort (11) peut être poussée à partir d'un côté du support de charge (1) jusqu'au côté opposé, dans lequel les ouvertures (9) alignées les unes avec les autres dans les nervures verticales (7) sont produites de telle sorte qu'un noyau d'un demi outil de moulage par injection forme respectivement sensiblement la surface de réception (4), plonge à partir du côté de la surface de réception dans la région d'une nervure verticale (7), en formant un évidement dans le fond et dans cette nervure, et, inversement, un noyau correspondant du second demi outil de moulage par injection, qui forme la surface inférieure de fond (5), plonge à partir du côté de la nervure, dans lequel les noyaux sont latéralement en contact l'un avec l'autre,
**caractérisé en ce qu'**une languette élastique (12) est formée dans l'une des ouvertures côté bord (9) comme un élément de support, et l'ouverture opposée (9) a une butée pour la barre de renfort (1), ou **en ce qu'**une languette élastique (12) est formée dans chacune des deux ouvertures côté bord (9), la languette (12) étant orientée de biais vers le bas et dans la direction d'insertion de la barre de renfort (11).
